# EUROPÄISCHE PATENTSCHRIFT

(11) **EP 2 160 279 B1**
(45) Veröffentlichungstag und Bekanntmachung des Hinweises auf die Patenterteilung: **15.03.2017**
(21) Anmeldenummer: 08773624.5
(22) Anmeldetag: 25.06.2008
(51) Int. Cl.: B29C 47/00, B29C 53/10

(54) **VORRICHTUNG ZUR HERSTELLUNG VON BLASFOLIEN**
DEVICE FOR PRODUCING BLOWN FILMS
DISPOSITIF DE RÉALISATION DE FILMS DE SOUFFLAGE

(30) Priorität: 28.06.2007 DE 102007030260
(43) Veröffentlichungstag der Anmeldung: 10.03.2010
(73) Patentinhaber: Reifenhäuser GmbH & Co. KG Maschinenfabrik, 53844 Troisdorf (DE)
(72) Erfinder: SPIRGATIS, Jens, 53773 Hennef (DE); BÖHM, Andreas, 53842 Troisdorf (DE)
(74) Vertreter: Wagner Albiger & Partner Patentanwälte mbB
(86) Internationale Anmeldenummer: PCT/EP2008/005116
(87) Internationale Veröffentlichungsnummer: WO 2009/000509

(56) Entgegenhaltungen:
- DE-A1- 2 340 259
- DE-A1- 3 937 772
- JP-A- 56 017 227
- JP-A- 2001 162 667
- US-A- 3 355 770
- US-A- 3 852 386
- US-A- 5 425 216
- US-A- 5 441 395

## Beschreibung

Die Erfindung betrifft eine Vorrichtung zur Herstellung von Blasfolien aus einem thermoplastischen Kunststoff, gemäß Anspruch 1.

Vorrichtungen der eingangs genannten Art sind vielfältig bekannt. Das Funktionsprinzip beruht darauf, die von mindestens einem Extruder hergestellte Schmelze des thermoplastischen Kunststoffes aus einer ringförmigen Austrittsöffnung eines Werkzeuges zu extrudieren und zu einem Schlauch aufzublasen, der nachfolgend von einer so genannten Flachlegeeinrichtung zusammengelegt, zwischen Abquetschwalzen hindurchgeführt und nachfolgend einer Aufwickeleinrichtung zugeführt wird.

Die Flachlegeeinrichtung besteht im einfachsten Fall aus zwei an diametral gegenüberliegenden Bereichen des Folienschlauches angeordneten und in einem spitzen Winkel - nach Art eines umgekehrten V oder eines A - zueinander gestellten Flachlegeelementen, deren Abstand zueinander in Austrittsrichtung des Folienschlauches betrachtet stetig verringert wird. Die Flachlegeelemente tragen eine Vielzahl von auf den Umfang des Folienschlauches einwirkenden Führungsmittel, wie z.B. Leisten, Rollen oder Bürsten, so dass der zunächst zylindrische Folienschlauch allmählich über eine Ovalform mit stetig sich ändernden Durchmessern zu einer doppellagigen und an den Längsrändern gefalzten Folie flachgelegt wird.

Betrachtet man die sich aus dem zunächst zylindrischen Folienschlauch bildende ovale Querschnittsgestaltung des allmählich flachgelegten Folienschlauches in der Flachlegeeinrichtung, so ist dieser im Bereich des größeren Durchmessers des ovalen Querschnittes, an dem sich letztlich die gefalzten Längsränder des Folienschlauches ausbilden, während der Flachlegung weitgehend sich selbst überlassen, da er nicht mit Führungsmitteln in Kontakt steht und von den Flachlegeelementen der Flachlegeeinrichtung nicht geführt wird. Dies kann zu Problemen hinsichtlich der Produktstabilität, Faltenfreiheit etc. führen.

Aus der US-A-4,170,624 ist es bekannt, in einer speziellen Flachlegeeinrichtung einen zunächst zylindrischen Folienschlauch in einen rechtwinkligen Querschnitt zu überführen und nachfolgend in einer Doppellage flachzulegen. Hierdurch sollen die mechanische Belastung des Folienschlauches während der Flachlegung und damit einhergehende Veränderungen des Eigenschaftsprofils des Folienschlauches vermieden werden.

Aus der US-A-3,355,770 ist eine Vorrichtung zum Flachlegen und Kühlen einer Schlauchfolie bekannt, die zwei Flachlegeelemente in einander gegenüberliegender Anordnung sowie weitere Führungselemente in nicht von den Flachlegeelementen eingenommenen Bereichen vorsieht. Die Flachlege- und Führungselemente sind aus ebenen und starren Dreieckskörpern gebildet, die lediglich in Bezug auf ihre winklige Anordnung zueinander justiert werden können, nicht jedoch über eine einstellbare Kontur in Anpassung an den Verlauf der Schlauchfolie verfügen.

Ergänzend wird zum Stand der Technik noch auf die DE 39 37 772 A1, US-A-3,852,386, US-A-5,441,395 und DE 23 40 259 A1 verwiesen.

Durch die im Stand der Technik bislang vorgegebene geradlinige Anordnung der als Führungsmittel für den Folienschlauch eingesetzten Bürsten, Rollen, Platten oder Leisten ist es jedoch nicht möglich, den Folienschlauch seitlich an mehreren Punkten aufsteigend zu führen. Vielmehr hat die vorhandene Form zur Folge, dass nur eine unzureichende, punktuelle Berührung möglich ist und somit, insbesondere bei Reversierbewegungen der Flachlegeeinrichtung und/oder einer den Abquetschwalzen nachgeordneten Abzugseinrichtung für den Folienschlauch zur Verbesserung des Querdickenprofils die Folie leicht Falten wirft, die sich bis zum fertigen Wickel durchziehen und die Qualität vermindern, was verbesserungswürdig erscheint.

Um dieses Problem zu lösen, schlägt die Erfindung Seitenführungselemente innerhalb der Flachlegeeinrichtung vor, die sich durch eine einstellbare, beispielsweise angenähert bogen- oder S-förmige Kontur auszeichnen.

Hierbei sind die Seitenführungselemente aus einer Tragstruktur mit Verstellmitteln und mit mindestens einem an der Tragstruktur befestigten Tragarm auszubilden, wobei der mindestens eine Tragarm beispielsweise an Haltegabeln befestigte Führungsmittel für den Folienschlauch trägt.

Die Tragstruktur besteht desweiteren aus mehreren gelenkig miteinander verbundenen Tragschenkeln, die mittels geeigneter Verstellantriebe individuell entsprechend dem gewünschten Verlauf des Folienschlauches während des Durchlaufs durch die Flachlegeeinrichtung eingestellt werden können. Hierbei können an jedem Tragschenkel ein oder mehrere Tragarme zur Halterung von Führungsmitteln befestigt sein. Pro Tragschenkel wird mindestens ein Tragarm vorgesehen.

Bei den Führungsmitteln selbst kann es sich um Rollen oder Walzen aus einem geeigneten Kunststoff, beispielsweise CFK, Silikon oder aber auch um Aluminium handeln, ferner können auch Bürstenwalzen vorgesehen sein oder aber es werden Platten mit einer porösen, vorzugsweise mikroporösen Oberfläche vorgesehen, aus denen ein Luftstrom zur Erzeugung eines Luftpolsters zwischen der Platte und dem Folienschlauch austritt, um eine berührungslose Führung zu gewährleisten. Derartige mikroporöse Schichten weisen vorzugsweise eine mittlere Porengröße von 5 bis 100 µm auf.

Im Falle sich drehender Rollen oder Walzen ist bevorzugt auf einen besonders leichten Lauf zu achten.

Weitere Einstellmöglichkeiten können dadurch gegeben sein, dass die Führungsmittel schwenkbar um eine in Austrittsrichtung des Folienschlauches verlaufende Schwenkachse an den Tragarmen gehaltert sind.

Die Verstellung der gelenkig miteinander verbundenen und segmentartig einander fortsetzenden Tragschenkel kann nicht nur hinsichtlich der zwischen benachbarten Tragschenkel eingeschlossenen Winkel variabel gestaltet werden, sondern auch hinsichtlich des Abstandes zum jeweils gegenüberliegenden Seitenführungselement, um eine Anpassung an den Durchmesser des Folienschlauches vorzunehmen. Gemäß einem weiteren Vorschlag der Erfindung kann es überdies auch vorgesehen sein, die einzelnen Tragschenkel z.B. mit einer geeigneten Teleskopiermechanik auch längsverstellbar auszugestalten, was zusätzliche Freiheitsgrade zur Anpassung an die gewünschte Kontur des flachzulegenden Folienschlauches bietet.

Es ist offensichtlich, dass bei Ausgestaltung des erfindungsgemäßen Seitenführungselements mit einer Vielzahl von Tragschenkeln auch bogenförmige Sollkonturen des Folienschlauches mit hoher Annäherung nachgebildet werden, insbesondere wenn auch die an den einzelnen Tragschenkeln befestigten Tragarme und die daran befestigten Haltegabeln für die Führungsmittel ihrerseits einstellbar, beispielsweise höhenverstellbar, seitenverstellbar und winkelverstellbar ausgeführt sind.

Die Führungsmittel sind im Bereich der erfindungsgemäß vorgesehenen Seitenführungselemente bevorzugt derart angeordnet, dass sie den Folienschlauch in möglichst großen Umfangsbereichen stützen und gemeinsam mit den Flachlegeelementen definiert dreidimensional stützen.

Nach einem weiteren Vorschlag der Erfindung kann jedes Seitenführungselement in seinem oberen Endbereich nahe der nachgeordneten Abquetschwalzen der Vorrichtung mit einer Leitschaufel ausgebildet sein, die den während der Flachlegung sich ausbildenden Längsrand des flachgelegten Folienschlauches außenseitig umgreift und somit für eine exakte Ausbildung des Randfalzes des flachgelegten Folienschlauches sorgt. Die Leitschaufel führt den Längsrand des Folienschlauches präzise in den Spalt zwischen den Abquetschwalzen ein, welche den Folienschlauch nachfolgend zur Flachlegeeinrichtung erfassen und weiter fördern. Auch diese Leitschaufel kann wiederum aus geeigneten Kunststoffen oder z.B. auch Aluminium gefertigt sein, wenn sie in Kontakt mit dem Folienschlauch steht oder aber auch mit einer dem Folienschlauch zugewandten porösen oder mikroporösen Oberfläche für den Austritt eines zugeführten Luftstromes und zur Erzeugung eines Luftpolsters zwecks berührungsloser Führung des Folienschlauches ausgestattet sein.

Auch in diesem Zusammenhang wird unter einer mikroporösen Oberfläche eine solche mit einer mittleren Porengröße von 5 bis 100 µm verstanden.

Der Abstand zu nachfolgenden Abquetschwalzen sollte gering gewählt sein und ist vorzugsweise einstellbar, so dass vorzugsweise eine definierte Führung des Längsrandes des Folienschlauches bis in den Walzenspalt der Abquetschwalzen bewirkbar ist.

Die Verstellung der einzelnen Tragschenkel kann beispielsweise über Spindelantriebe oder andere geeignete Antriebe mit hoher Positioniergenauigkeit bewerkstelligt werden, wobei weiter bevorzugt jeder Tragschenkel über einen eigenen Verstellantrieb verfügt. Die Verstellantriebe ihrerseits können auch zentral miteinander verbunden sein.

Weitere Ausgestaltungen und Einzelheiten der Erfindung werden nachfolgend anhand der ein Ausführungsbeispiel darstellenden Zeichnung näher erläutert.

Es zeigen:
- Fig. 1: die schematisierte Seitenansicht einer erfindungsgemäß ausgestalteten Vorrichtung;
- Fig. 2: die sich während der Flachlegung des Folienschlauches ändernde Querschnittsgestaltung des Folienschlauches; und
- Fig. 3: die Aufsicht auf einen Teil eines erfindungsgemäß ausgestalteten Seitenführungselementes.

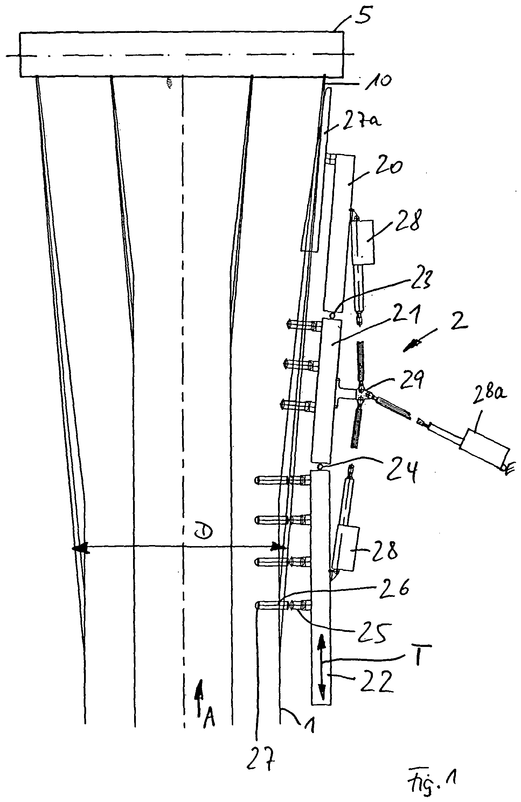

Die Figur 1 zeigt in grob schematisierter Darstellung einen aus einer Extrusionseinrichtung in bekannter Weise hergestellten und in einer Austrittsrichtung A vertikal nach oben geführten Folienschlauch 1, der mittels nicht näher dargestellter Flachlegeelemente einer Flachlegeeinrichtung allmählich zu einem flachen Folienschlauch zusammengelegt wird und in einen Spalt zwischen zwei Abquetschwalzen 5 eingeführt wird. Man erkennt ferner ein zu der Flachlegeeinrichtung gehöriges Seitenführungselement 2, welches selbstverständlich spiegelbildlich zur Mittellängsachse des Folienschlauches 1 auch auf der gegenüberliegenden Seite angeordnet ist.

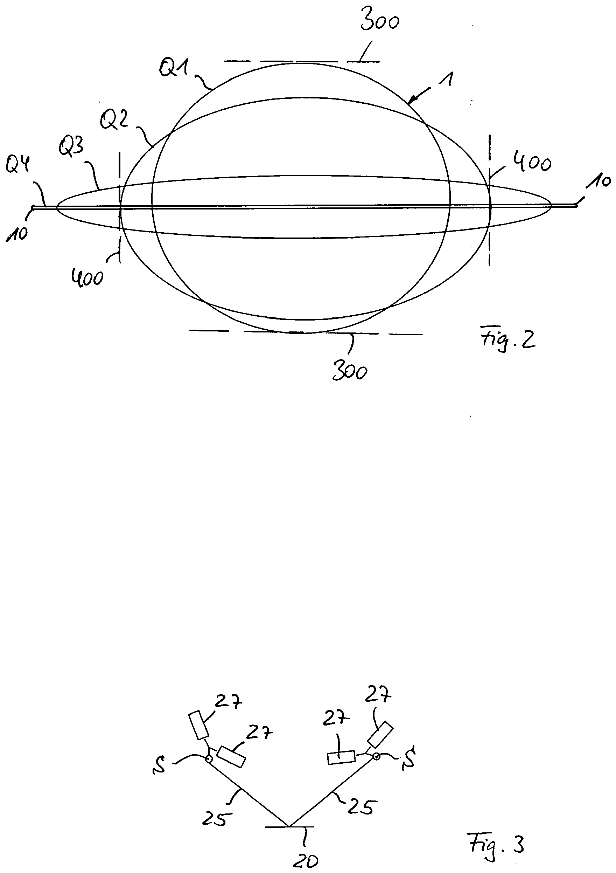

Infolge der Einwirkung der Flachlegelemente, die gemäß Darstellung in Figur 2 an einem mit Bezugszeichen 300 gekennzeichneten Bereich des zunächst zylindrischen, d.h. einen kreisförmigen Querschnitt Q1 aufweisenden Folienschlauch 1 angreifen, wird der Folienschlauch 1 allmählich über ovale Querschnitte, die beispielhaft mit Q2 und Q3 gekennzeichnet sind, in eine flachgelegte doppellagige Folienbahn mit Querschnitt Q4 und Randfalzen 10 überführt.

Die Seitenführungselemente 2 führen während dieser Flachlegung vom Querschnitt Q1 zum Querschnitt Q4 den Folienschlauch 1 kontinuierlich im Bereich 400 des größeren Durchmessers, d.h. zwischen den Flachlegeelementen gemäß Bezugsziffer 300 im Bereich der sich ausbildenden Randfalze 10 und den daran angrenzenden Bereichen des Folienschlauchs 1.

Jedes Seitenführungselement 2 besteht gemäß Figur 1 aus einer Tragstruktur mit drei mit Bezugsziffern 20, 21, 22 gekennzeichneten Tragschenkeln, die über Gelenke 23, 24 miteinander verbunden, d.h. verkettet sind.

Jeder der Tragschenkel 20, 21, 22 trägt seinerseits Tragarme 25, an denen dem Folienschlauch 1 zugewandt Führungsmittel 27 für den Folienschlauch 1, beispielsweise CFK-Rollen gehaltert sind, die in oberflächlichem Kontakt mit dem Folienschlauch 1 stehen und eine exakte Führung desselben in der gewünschten Kontur bewirken.

Wie aus der Figur 3 ersichtlich, können am freien Ende jedes Tragarmes 25 paarweise Führungsmittel 27 vorgesehen sein, die bedarfsweise über einen in Antrittsrichtung des Folienschlauches 1 verlaufende Schwenkachse S gelenkig gelagert sind, um sich optimal an den Umfang des Folienschlauches 1 anzupassen.

Am in Austrittsrichtung A gesehen oberen Tragsegment 20 ist anstelle von Führungsmitteln in Gestalt von Rollen eine Leitschale 27a vorgesehen, die den sich ausbildenden Randfalz 10 des flachgelegten Folienschlauches 1 außenseitig übergreift und für eine exakte Führung desselben bis in den Spalt zwischen den in der Figur 1 deckungsgleich hintereinander angeordneten Abquetschwalzen 5 sorgt.

Aufgrund der gelenkigen Verbindung der einzelnen Tragschenkel 20, 21, 22 untereinander sind diese relativ zueinander hinsichtlich der eingeschlossenen Winkel in Anpassung an die gewünschte Kontur des Folienschlauches zueinander verstellbar. Hierzu sind unabhängige Antriebe, beispielsweise Spindelantriebe 28 vorgesehen, die im gezeigten Ausführungsbeispiel am Tragschenkel 20 bzw. Tragschenkel 22 angreifen, während des dazwischen liegende Tragschenkel 21 über einen Kragarm 29 verfügt, an dem die Antriebe 28 angreifen. Man erkennt ferner einen weiteren angreifenden Arm eines Antriebes 28a, der seinerseits unmittelbar am Kragarm 29 angreift. Durch diese Konfiguration und Betätigung der einzelnen Antriebe 28, 28a ist die winklige Ausrichtung der aufeinanderfolgenden Tragschenkel und damit der daran befestigten Führungsmittel für den Folienschlauch 1 in weiten Grenzen einstellbar und kann insbesondere die sich an einem flachzulegenden Folienschlauch 1 einstellenden bogenförmigen Randverläufe desselben optimal nachvollziehen und damit eine wesentlich präzisere Führung bewirken, die sich letztlich in einer deutlich verbesserten Qualität des flachgelegten Folienschlauches 1 äußert.

Alternativ kann auch für jeden Tragschenkel 20, 21, 22 ein eigener Antrieb 28 vorgesehen sein, ohne diese Antriebe miteinander zu verbinden.

Die Tragschenkel 20, 21, 22 sind in Richtung des Durchmessers D des Folienschlauches unabhängig voneinander verstellbar und können jeweils in Pfeilrichtung T auch teleskopierbar, d.h. längenveränderlich ausgebildet sein.

Es versteht sich, dass anstelle der hier dargestellten drei Tragschenkel 20, 21, 22 auch lediglich zwei oder auch mehr als drei derartige Tragschenkel vorgesehen und mit entsprechenden Antrieben versehen sein können, wobei weiterhin vorgeschlagen wird, dass jeder Tragschenkel mindestens einen Tragarm 25 für ein Führungsmittel aufweist.

## Patentansprüche

1. Vorrichtung zur Herstellung von Blasfolien, umfassend eine einen Folienschlauch (1) erzeugende Extrusionseinrichtung sowie eine dem Folienschlauch (1) zugeordnete Flachlegeeinrichtung mit zwei an diametral gegenüberliegenden Bereichen des Folienschlauches angeordneten und in einem spitzen Winkel zueinander einstellbaren Flachlegeelementen zur Überführung des zunächst kreisförmigen Querschnittes des Folienschlauches über ovale Querschnitte zu einer doppelt liegenden Folienbahn, wobei zwischen den Flachlegeelementen Seitenführungselemente (2) für die von den Flachlegeelementen ausgesparten Bereiche des Folienschlauchs (1) angeordnet und dem Folienschlauch (1) zugeordnet sind, **dadurch gekennzeichnet, dass** die Seitenführungselemente (2) eine einstellbare Kontur aufweisen und die Seitenführungselemente (2) aus einer Tragstruktur mit Verstellmitteln gebildet sind, wobei mindestens ein Tragarm (25) an der Tragstruktur befestigt ist und der mindestens eine Tragarm (25) Führungsmittel (27) für den Folienschlauch (1) trägt und die Tragstruktur mehrere gelenkig miteinander verbundene Tragschenkel (20, 21, 22) umfasst, die mittels Verstellantrieben (28, 28a) verstellbar sind.

2. Vorrichtung nach Anspruch 1, **dadurch gekennzeichnet, dass** die Führungsmittel (27) von Rollen oder Walzen, Bürstenwalzen oder mit einem Luftstrom zur Erzeugung eines Luftpolsters beaufschlagbaren Platten gebildet sind.

3. Vorrichtung nach Anspruch 1 oder 2, **dadurch gekennzeichnet, dass** jeder Tragschenkel (20, 21, 22) einen eigenen Verstellantrieb (28, 28a) aufweist.

4. Vorrichtung nach einem der Ansprüche 1 bis 3, **dadurch gekennzeichnet, dass** die Verstellantriebe (28, 28a) der Schenkel (20, 21, 22) miteinander verbunden sind.

5. Vorrichtung nach einem der Ansprüche 1 bis 4, **dadurch gekennzeichnet, dass** der Winkel zwischen aufeinanderfolgenden Tragschenkeln (20, 21, 22) eines Seitenführungselementes (2) und/oder der Abstand zum anderen Seitenführungselement (2) einstellbar ist.

6. Vorrichtung nach einem der Ansprüche 1 bis 5, **dadurch gekennzeichnet, dass** die Seitenführungselemente (2) in axialer Richtung (A) des Folienschlauches (1) längenverstellbar ausgebildet sind.

7. Vorrichtung nach einem der Ansprüche 1 bis 6, **dadurch gekennzeichnet, dass** die Seitenführungselemente (2) an ihrem der Extrusionseinrichtung abgewandten Ende mit einer Leitschaufel (27a) ausgerüstet sind, die den während der Flachlegung des Folienschlauches (1) sich ausbildenden Randfalz (10) des Folienschlauches (1) umgreift.

8. Vorrichtung nach Anspruch 7, **dadurch gekennzeichnet, dass** die Leitschaufel (27a) an den Folienschlauch (1) anlegbar ist oder mittels der Leitschaufel (27a) ein Luftpolster zur berührungslosen Führung des Folienschlauches (1) erzeugbar ist.

9. Vorrichtung nach Anspruch 7 oder 8, **dadurch gekennzeichnet, dass** die Leitschaufel (27a) verstellbar am Seitenführungselement (2) gehaltert ist.

## Claims

1. Device for manufacturing blown film comprising an extrusion device generating a film tube (1) and a flattening device assigned to the film tube (1) having flattening elements, which are arranged at diametrically opposing regions of the film tube and can be adjusted at an acute angle to each other, in order to transfer the initially circular cross-section of the film tube via oval cross-sections to a two-folded film web, wherein lateral guide elements (2) for the regions of the film tube (1) recessed by the flattening elements are arranged between the flattening elements and are assigned to the film tube (1), **characterised in that** the lateral guide elements (2) comprise an adjustable contour and the lateral guide elements (2) are formed by a support structure with adjustment means wherein at least one support arms (25) is attached to the support structure and the at least one support arm (25) supports guide means (27) for the film tube (1) and the support structure comprises a plurality of support legs (20, 21, 22) articulatedly connected to each other which can be adjusted by means of adjustment drives (28, 28a).

2. Device according to claim 1, **characterised in that** the guide means (27) are formed by rollers, brush rollers or plates to which an air current can be applied in order to generate an air pocket.

3. Device according to claim 1 or 2, **characterised in that** each support leg (20, 21, 22) comprises its own adjustment drive (28, 28a).

4. Device according to any one of claims 1 to 3, **characterised in that** the adjustment drives (28, 28a) of the legs (20, 21, 22) are connected to each other.

5. Device according to any one of claims 1 to 4, **characterised in that** the angle between consecutive support legs (20, 21, 22) of a lateral guide element (2) and/or the distance to another lateral guide element (2) is adjustable.

6. Device according to any one of claims 1 to 5, **characterised in that** the lateral guide elements (2) are designed so as to be adjustable in length in the axial direction (A) of the film tube (1).

7. Device according to any one of claims 1 to 6, **characterised in that** the lateral guide elements (2) are equipped with a guide vane (27a) on their end facing away from the extrusion device which encompasses the edge fold (10) of the film tube (1) forming during the flattening of the film tube (1).

8. Device according to claim 7, **characterised in that** the guide vane (27a) can be applied to the film tube (1) or an air pocket can be generated by means of the guide vane (27a) for the contactless guiding of the film tube (1).

9. Device according to claim 7 or 8, **characterised in that** the guide vane (27a) is fixed in an adjustable manner on the lateral guide element (2).

## Revendications

1. Dispositif de réalisation de films de soufflage, comprenant un système d'extrusion produisant un tuyau flexible en film (1) ainsi qu'un système de pose à plat associé au tuyau flexible en film (1) avec deux éléments de pose à plat disposés au niveau de zones, disposées diamétralement en vis-à-vis, du tuyau flexible en film et pouvant être réglés l'un par rapport à l'autre selon un angle aigu, servant à transformer la section transversale présentant d'abord une forme circulaire du tuyau flexible en film, en passant par des sections transversales ovales, en une bande de film doublée, dans lequel des éléments de guidage latéral (2) pour les zones, évidées par les éléments de pose à plat, du tuyau flexible en film (1) sont disposés entre les éléments de pose à plat et sont associés au tuyau flexible en film (1), **caractérisé en ce que** les éléments de guidage latéral (2) présentent un contour pouvant être réglé, et les éléments de guidage latéral (2) sont formés à partir d'une structure de support avec des moyens d'ajustement, dans lequel au moins un bras de support (25) est fixé au niveau de la structure de support et l'au moins un bras de support (25) supporte des moyens de guidage (27) pour le tuyau flexible en film (1) et la structure de support comprend plusieurs branches de support (20, 21, 22) reliées les unes aux autres de manière articulée, lesquelles peuvent être ajustées au moyen d'entraînements d'ajustement (28, 28a).

2. Dispositif selon la revendication 1, **caractérisé en ce que** les moyens de guidage (27) sont formés par des rouleaux ou des cylindres, des cylindres à balai ou avec des plaques pouvant être soumises à l'action d'un flux d'air servant à produire un rembourrage d'air.

3. Dispositif selon la revendication 1 ou 2, **caractérisé en ce que** chaque branche de support (20, 21, 22) présente un entraînement d'ajustement (28, 28a) propre.

4. Dispositif selon l'une quelconque des revendications 1 à 3, **caractérisé en ce que** les entraînements d'ajustement (28, 28a) des branches (20, 21, 22) sont reliés les uns aux autres.

5. Dispositif selon l'une quelconque des revendications 1 à 4, **caractérisé en ce que** l'angle entre des branches de support (20, 21, 22) se suivant d'un élément de guidage latéral (2) et/ou la distance par rapport à l'autre élément de guidage latéral (2) peuvent être réglés.

6. Dispositif selon l'une quelconque des revendications 1 à 5, **caractérisé en ce que** les éléments de guidage latéral (2) sont réalisés de manière à pouvoir être ajustés en longueur dans la direction axiale (A) du tuyau flexible en film (1).

7. Dispositif selon l'une quelconque des revendications 1 à 6, **caractérisé en ce que** les éléments de guidage latéral (2) sont équipés, au niveau de leur extrémité opposée au système d'extrusion, d'une aube directrice (27a), qui entoure le pli de bordure (10) du tuyau flexible en film (1) se réalisant au cours de la pose à plat du tuyau flexible en film (1).

8. Dispositif selon la revendication 7, **caractérisé en ce que** l'aube directrice (27a) peut être appliquée au niveau du tuyau flexible en film (1), ou un rembourrage d'air servant à guider sans contact le tuyau flexible en film (1) peut être produit au moyen de l'aube directrice (27a).

9. Dispositif selon la revendication 7 ou 8, **caractérisé en ce que** l'aube directrice (27a) est maintenue de manière à pouvoir être ajustée au niveau de l'élément de guidage latéral (2).
